# EUROPÄISCHE PATENTSCHRIFT

(11) **EP 3 062 112 B1**
(45) Veröffentlichungstag und Bekanntmachung des Hinweises auf die Patenterteilung: **15.11.2017**
(21) Anmeldenummer: 16150178.8
(22) Anmeldetag: 05.01.2016
(51) Int. Cl.: G01P 1/02, G01P 13/00, G08B 13/19

(54) **VORRICHTUNG ZUR ERKENNUNG DER PRÄSENZ ODER BEWEGUNG VON PERSONEN**
DEVICE FOR DETECTING THE PRESENCE OR MOVEMENT OF PERSONS
DISPOSITIF POUR DÉTECTER LA PRÉSENCE OU LE MOUVEMENT DE PERSONNES

(30) Priorität: 25.02.2015 DE 102015102646
(43) Veröffentlichungstag der Anmeldung: 31.08.2016
(73) Patentinhaber: Insta GmbH, 58509 Lüdenscheid (DE)
(72) Erfinder: Voigtländer, Andreas, 58509 Lüdenscheid (DE); Kannapinn, Jörg, 59174 Kamen (DE)

(56) Entgegenhaltungen:
- EP-A1- 0 571 052
- DE-A1- 3 540 680
- DE-B3-102005 015 748
- DE-C1- 19 639 318
- DE-U1-202008 000 804
- DE-U1-202010 003 744
- US-A1- 2007 241 896

## Beschreibung

Die vorliegende Erfindung geht von einem gemäß Oberbegriff des unabhängigen Anspruchs konzipierten Melder zur Erkennung der Präsenz und/oder Bewegung von sich im Erfassungsbereich befindlichen Personen aus.

Derartige Melder sind in der Regel dafür vorgesehen, innerhalb und/oder außerhalb von Gebäuden auf automatische Art und Weise Aktoren beziehungsweise Verbraucher, wie zum Beispiel eine zugeordnete Beleuchtungseinrichtung, Jalousien, Gebäudeheizungen und so weiter bedarfsgerecht zu beeinflussen. Viele solcher Melder weisen jedoch einen aufwendigen, vergleichsweise hohe Kosten verursachenden Aufbau auf, um bedarfsgerecht einen großen Erfassungsbereich zur Verfügung zu stellen, in dem die sich darin befindlichen Personen sicher erkannt werden. Oftmals sind derartige Melder mit Stelleinrichtungen versehen, um dem Benutzer eine individuelle Einstellung von Beeinflussungsparametern, wie zum Beispiel Empfindlichkeit, Nachlaufzeit, Schaltschwellen und/oder für die Inbetriebnahme als Busgerät in einem Gebäudeinstallationssystem zu ermöglichen. Oftmals sind die zur Betätigung der Stelleinrichtungen notwendigen Betätigungselemente für den Benutzer nur umständlich zu erreichen beziehungsweise zu bedienen und/oder treten unschön, das Design des Melders störend, in Erscheinung. Auch ist oftmals das zur Erfassung von Umgebungslicht notwendige Sensorelement nicht optimal angeordnet und/oder tritt unschön das Design des Melders störend in Erscheinung.

Durch die DE 35 40 680 A1 ist ein dem Oberbegriff des unabhängigen Anspruchs entsprechender Melder bekannt geworden. Ein solcher Melder ist zur Erkennung der Präsenz und/oder Bewegung von sich im Erfassungsbereich aufhaltenden Personen vorgesehen und weist ein Gehäuse auf, welches zur Aufnahme einer Leiterplattenanordnung vorgesehen ist. Die Leiterplattenanordnung ist mit einer zumindest ein erstes Sensorelement aufweisenden Sensoranordnung zur Erfassung von Infrarotstrahlung und mit einer zumindest ein zweites Sensorelement aufweisenden Sensoreinrichtung zur Erfassung der Umgebungshelligkeit und mit mehreren, von außen durch einen Benutzer beeinflussbaren Stelleinrichtungen sowie mit zumindest einem Microcontroller und weiteren zur Funktion notwendigen Bauteilen bestückt. Am Gehäuse dieses Melders ist, wie üblich, eine mehrere Linsensegmente aufweisende Linsenkappe festgelegt. Das Gehäuse besteht aus einem Gehäuseunterteil und einem mit der Linsenkappe versehenen Gehäuseoberteil.

Des Weiteren ist durch die DE 10 2005 015 748 B3 ein Melder bekannt geworden. Ein solcher Melder ist zur Erkennung der Präsenz und/oder Bewegung von sich im Erfassungsbereich aufhaltenden Personen vorgesehen und weist ein Gehäuse auf, welches zur Aufnahme einer Leiterplattenanordnung vorgesehen ist. Die Leiterplattenanordnung ist mit einer, mehrere erste Sensorelemente aufweisenden Sensoranordnung zur Erfassung von Infrarotstrahlung und mit einer zumindest ein zweites Sensorelement aufweisenden Sensoreinrichtung zur Erfassung der Umgebungshelligkeit und mit mehreren, von außen durch einen Benutzer beeinflussbaren Stelleinrichtungen sowie mit zumindest einem Microcontroller und weiteren zur Funktion notwendigen Bauteilen bestückt. Am Gehäuse dieses Melders ist, wie üblich, eine mehrere Linsensegmente aufweisende Linsenkappe festgelegt.

Zudem ist durch die DE 20 2010 003 744 U1 eine wasserbeständige Sensorvorrichtung bekannt geworden, welche eine Halterung und einen hinteren Deckel aufweist, wobei der Deckel wahlweise drehbar in der Halterung gelagert ist und eine Seitenwand zur Ausbildung eines Aufnahmeraumes vorgesehen ist. Das Sensormodul befindet sich innerhalb des Aufnahmeraumes. Zudem ist eine Linse vorgesehen, die an einer Endkante der Seitenwand des hinteren Deckels anliegt und somit den Aufnahmeraum verschließt, wobei zwischen der Linse und der Endkante der Seitenwand eine Wasserabdichtung vorgesehen ist.

Außerdem ist durch die DE 20 2008 000 804 U1 eine bewegungssensorgesteuerte Leuchtenvorrichtung bekannt geworden, bei welcher in Kombination ein Bewegungssensor und ein Sensor für die Umgebungshelligkeit vorgesehen ist. Die Leuchtmittelvorrichtung weist vom Bewegungssensor beeinflussbare erste Leuchtmittel und für den Dauerbetrieb notwendige zweite Leuchtmittel auf. Das als Schraubsockel ausgeführte Gehäuseteil weist eine Mehrzahl von um den Umfang des Gehäuses herum angeordnete Lichteintrittsöffnungen auf, welche einerseits mittels eines Lichtleiters optisch miteinander verbunden sind und welche andererseits das Umgebungslicht einem Phototransistor zuführen.

Zudem ist durch die DE 196 39 318 C1 ein Mehrfach-Passiv-Infrarot-Bewegungsmelder bekannt geworden. Der Mehrfach-Passiv-Infrarot-Bewegungsmelder teilt einen zu überwachenden Raum durch das spezielle Optik- und Abschottungssystem individuell in verschiedene Erfassungsbezirke für mindestens zwei verschiedene Passiv-Infrarot-Bewegungsmelder auf. Diese Erfassungsbezirke dürfen sich für eine spätere logische Auswertung keinesfalls überschneiden, da es anderenfalls zu nicht verwertbaren Doppelsignalen kommt. Zur Lösung sind mindestens zwei voneinander unabhängige Passiv-Infrarot-Bewegungsmelder dicht untereinander in einem gemeinsamen Gehäuse vereinigt. Die mindestens zwei Meldersignale werden auf eine gemeinsame Auswertlogik geschaltet. Die Fresneloptik ist so ausgestaltet, dass jeder Punkt im Überwachungsbereich von jedem Melder separat mit gleichem Segmenttyp detektiert wird. Um den Passiv-Infrarot-Bewegungsmelder sind in bestimmten Gradschritten spezielle verschiebbare Abschottungslamellen angeordnet, die bei ihrem Verschieben einen Teil der Segmente des einen Melders öffnen und gleichzeitig die Segmente des gleichen Typs des anderen Melders verschließen. Der erfindungsgemäße Passiv-Infrarot-Bewegungsmelder kann beispielsweise zur Außenhautsicherung in Einbruchmeldesystemen oder zur zuverlässigen Präsenzmeldung von Personen eingesetzt werden.

Ausgehend von solchen Meldern liegt der vorliegenden Erfindung die Aufgabe zugrunde, einen Melder zu schaffen, welcher bei einfachem und kostengünstigem Aufbau bei hoher Funktionszuverlässigkeit einen vergleichsweise großen Erfassungsbereich zur Verfügung stellt, wobei dessen zur Erfassung von Umgebungslicht notwendige Sensoreinrichtung bei besonders gutem Erfassungsverhalten, ohne das Design des Melders zu stören, angeordnet ist. Vorteilhafterweise ist die Beaufschlagung des zweiten Sensorelementes der Sensoreinrichtung mit Störlicht weitgehend vermieden.

Erfindungsgemäß wird diese Aufgabe durch die im unabhängigen Anspruch angegebenen Merkmale gelöst.

Bei einer solchen Ausbildung ist besonders vorteilhaft, dass bei vergleichsweise kompaktem Aufbau ein großer Erfassungsbereich bei sicherem Erkennungsverhalten abgedeckt wird. Außerdem ist besonders vorteilhaft, dass dieser Melder baukastenartig sowohl für die direkte Montage in Zwischendecken als auch für eine Montage in Installationsdosen verwendet werden kann. Dabei können vorteilhafterweise Installationsdosen Verwendung finden, die zum Beispiel als Unterputzdosen, als Hohlwanddosen oder als Aufputzdosen ausgeführt sind. In allen Anwendungsfällen sorgt vorteilhafterweise eine durch die Linsenkappe verdeckt angeordnete Sensoreinrichtung und ein wiederlösbar am Gehäuseoberteil festlegbarer Designring für einen formschönen Abschluss des Melders.

Weitere vorteilhafte Ausgestaltungen des erfindungsgemäßen Gegenstandes sind in den abhängigen Ansprüchen angegeben. Anhand mehrerer Ausführungsbeispiele sei die Erfindung im Prinzip näher erläutert. Dabei zeigen:
- Fig. 1:: prinziphaft eine Explosionsdarstellung eines derartigen Melders, in räumlicher Darstellung;
- Fig. 2:: prinziphaft einen gemäß Figur 1 ausgeführten Melder, vorgesehen zur direkten Montage in eine Zwischendecke, im Zusammenbau, mit zwei zugeordneten Federbügeln und einem zugeordneten Designring;
- Fig.3:: prinziphaft einen gemäß Figur 1 ausgeführten Melder, vorgesehen zur Montage in eine Installationsdose, im Zusammenbau, mit zwei zugeordneten Federlaschen, einem Montagering und einem zugeordneten Designring;
- Fig. 4:: prinziphaft einen gemäß Figur 1 ausgeführten Melder, in der Draufsicht, ohne Designring;
- Fig.5:: prinziphaft einen gemäß Figur 1 ausgeführten Melder, im Vollschnitt, entsprechend Linie A-A gemäß Figur 4;
- Fig.6:: prinziphaft einen gemäß Figur 1 ausgeführten Melder, im Vollschnitt, entsprechend Linie B-B gemäß Figur 4;
- Fig.7:: prinziphaft einen Melder, im Vollschnitt, entsprechend Linie B-B gemäß Figur 4, in einer minder bestückten Variante.

Wie aus den Figuren hervorgeht, besteht ein solcher zur Erkennung der Präsenz und/oder Bewegung von sich im Erfassungsbereich aufhaltenden Personen vorgesehener Melder im Wesentlichen aus einem Gehäuse, welches zur Aufnahme einer Leiterplattenanordnung vorgesehen ist. Die Leiterplattenanordnung ist mit einer, drei ersten Sensorelementen 3 aufweisenden Sensoranordnung zur Erfassung von Infrarotstrahlung und mit einer, ein zweites Sensorelement 4 aufweisenden Sensoreinrichtung zur Erfassung der Umgebungshelligkeit bestückt. Außerdem ist die Leiterplattenanordnung mit mehreren von außen durch einen Benutzer beeinflussbaren Stelleinrichtungen 5,6 sowie einem Microcontroller 7 und weiteren zur Funktion notwendigen Bauteilen 8 bestückt. Das Gehäuse besteht aus einem Gehäuseunterteil 1a und einem, einstückig mit der Linsenkappe 9 versehenen Gehäuseoberteil 1b. An der Leiterplattenanordnung ist ein Halter 13 festgelegt, der sowohl die ersten Sensorelemente 3 der Sensoranordnung als auch das zweite Sensorelement 4 der Sensoreinrichtung aufnimmt. Dem zweiten Sensorelement 4 der Sensoreinrichtung ist einerseits ein im Halter 13 angeordneter Lichtleiter 14 zugeordnet, welcher andererseits zur Innenseite der Linsenkappe 9 geführt ist. Um für die Umgebungslichterfassung optimale Verhältnisse zu schaffen, ist die Linsenkappe 9 im Bereich der Lichtleiterzuordnung mit einer als klar transparentes Fenster ausgeführten optischen Ausbildung OA versehen.

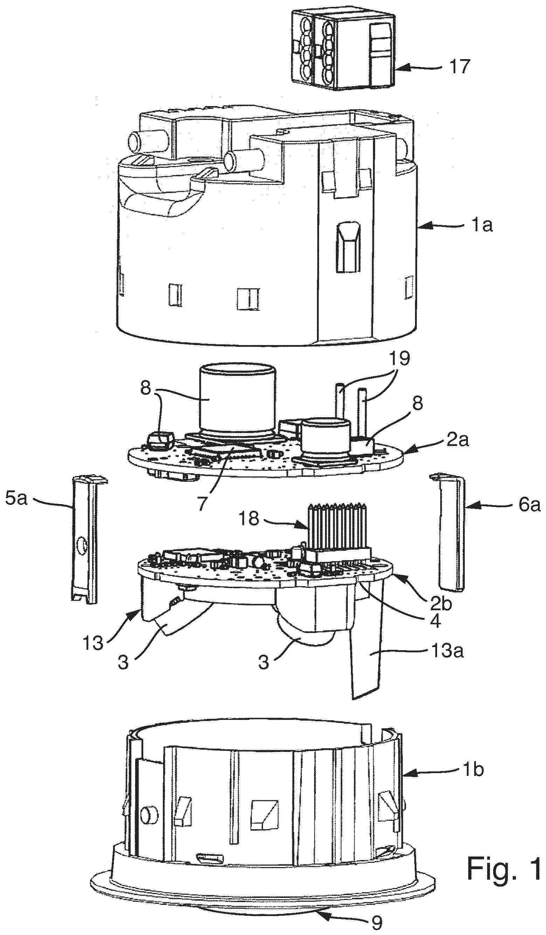

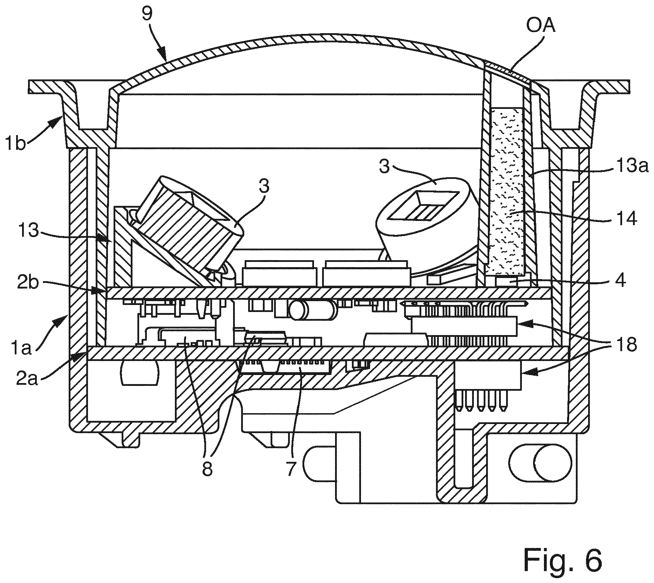

Wie insbesondere aus den Figuren 1, 6 und 7 hervorgeht, ist der Lichtleiter 14 stabartig ausgeführt und in einem schornsteinartigen Gebilde 13a des Halters 13 aufgenommen. Das schornsteinartige Gebilde 13a des Halters 13 ist bis an die Innenseite der Linsenkappe 9 herangeführt. Der im schornsteinartigen Gebilde 13a angeordnete, einerseits dem zweiten Sensorelement 4 der Sensoreinrichtung zugeordnete, Lichtleiter 14 endet andererseits knapp unterhalb der Innenseite der Linsenkappe 9. Das schornsteinartige Gebilde 13a ist dabei derart angeordnet und ausgeführt, dass es mit seinem freien Ende der, als klar transparentes Fenster ausgeführten optischen Ausbildung OA direkt zugeordnet ist. Damit sind das zweite Sensorelement 4 der Sensoreinrichtung, der Lichtleiter 14 und das, den Lichtleiter 14 aufnehmende schornsteinartige Gebilde 13a verdeckt, also das Design des Melders nicht störend, angeordnet.

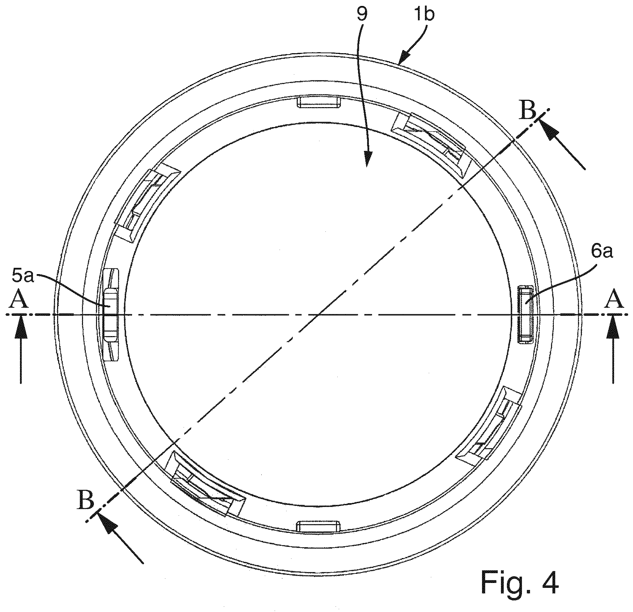

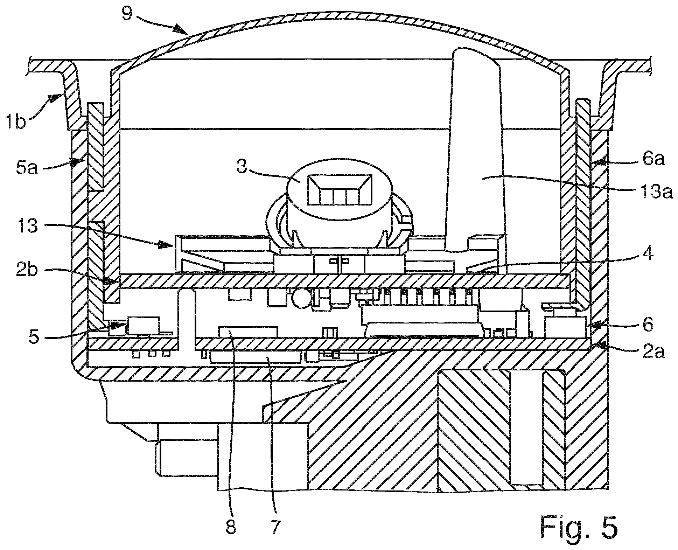

Wie des Weiteren insbesondere aus den Figuren 1 bis 6 hervorgeht, ist die Leiterplattenanordnung mit mehreren, von außen durch einen Benutzer beeinflussbaren Stelleinrichtungen 5, 6 sowie einen Microcontroller 7 und weiteren, zur Funktion notwendigen Bauteilen 8 bestückt. Das Gehäuse besteht aus einem Gehäuseunterteil 1a und einem, mit der Linsenkappe 9 einstückig versehenen Gehäuseoberteil 1b. Aus dem Gehäuseoberteil 1b sind einerseits zwei Betätigungselemente 5a, 6a nach außen geführt, die andererseits jeweils mit einer Stelleinrichtung 5, 6 in Wirkverbindung stehen. Die einerseits nach außen geführten Betätigungselemente 5a, 6a bieten somit einen komfortablen Zugang für den Benutzer, der durch einen, wiederlösbar am Gehäuseoberteil 1b festlegbaren Designring 10 abdeckbar beziehungsweise wiederverschließbar ist. Beim montierten Designring 10 sind die Betätigungselemente 5a, 6a also verdeckt, das Design des Melders nicht störend, angeordnet.

Wie des Weiteren aus den Figuren hervorgeht, ist der Designring 10 in Art einer Bajonettbefestigung wiederlösbar am Gehäuseoberteil 1b festlegbar. Zu diesem Zweck sind vier hakenförmig ausgebildete Befestigungselemente 10a an den Designring 10 angeformt, die mit entsprechend ausgeführten, am Gehäuseoberteil 1b vorhandenen Befestigungselementen bajonettartig zusammenwirken. Bei Bedarf kann der Designring 10 mit einem zum Beispiel ringartig ausgeführten Dichtelement 11 versehen sein.

Die im Gehäuse 1 untergebrachte Leiterplattenanordnung 2 besteht bei den, in den Figuren 1 bis 6 dargestellten Ausführungsbeispielen aus einer, mit mehreren zur Funktion notwendigen Bauteilen 8 bestückten Hauptleiterplatte 2a und einer, mit den drei ersten Sensorelementen 3 der Sensoranordnung und mit dem zweiten Sensorelement 4 der Sensoreinrichtung bestückten Sensorleiterplatte 2b. Zudem ist die Sensorleiterplatte 2b mit weiteren, zur Funktion notwendigen Bauteilen 8 bestückt. Die Sensoranordnung mit ihren drei ersten Sensorelementen 3 ist dafür vorgesehen, die Präsenz und/oder Bewegung von sich im Erfassungsbereich aufhaltenden Personen aufgrund von Infrarotstrahlung sicher zu erkennen. Die Sensoreinrichtung mit ihrem zweiten Sensorelement 4 ist dafür vorgesehen, die Umgebungshelligkeit zu erfassen, das heißt, die in der Umgebung vorliegende Lichtintensität zu ermitteln. Durch den auf der Hauptleiterplatte 2a befindlichen Microcontroller 7 erfolgt eine Auswertung der mit Hilfe der Sensoranordnung und der Sensoreinrichtung ermittelten Messgrößen. Aufgrund dieser Messgrößen werden dann angeschlossene - der Einfachheit halber nicht dargestellte - Aktoren beziehungsweise Verbraucher, wie zum Beispiel eine zugeordnete Beleuchtungseinrichtung, Jalousien, Gebäudeheizung und so weiter bedarfsgerecht beeinflusst. Zur gemeinsamen Halterung und exakten Ausrichtung, auch hinsichtlich der einstückig am Gehäuseoberteil 1b vorhandenen Linsenkappe 9, ist ein Halter 13 vorgesehen, welcher an der Sensorleiterplatte 2b festgelegt ist. Der Halter 13 ist dabei derart ausgebildet, dass sowohl die drei ersten Sensorelemente 3, als auch das zweite Sensorelement 4 gemeinschaftlich aufgenommen werden. Wie bereits vorstehend beschrieben, ist dem zweiten Sensorelement 4 einerseits ein im Halter 13 befindlicher Lichtleiter 14 zugeordnet, welcher andererseits in Richtung Innenseite der Linsenkappe 9 geführt ist. Im Bereich des andererseits zugeordneten Lichtleiters 14 weist die Linsenkappe 9 die optische Ausbildung OA auf, die hinsichtlich der Erfassung der Helligkeit von Umgebungslicht besonders geeignet ausgeführt ist. Die optische Ausbildung OA ist als möglichst klar transparentes, in der Materialdicke reduziertes Fenster ausgeführt. Das Fenster (optische Ausbildung OA) ist so angeordnet, dass es, die Erfassung von Infrarotstrahlung möglichst nicht behindernd, zwischen zwei Linsensegmenten der Linsenkappe 9 angeordnet ist. Jedes der beiden Linsensegmente ist in seiner Ausprägung lediglich um ein Drittel reduziert, um eine gute Erfassung der Helligkeit von Umgebungslicht zu ermöglichen. Damit das zweite Sensorelement 4 nur mit besonders wenig Streulicht beaufschlagt wird, ist der knapp unter der Innenseite der Linsenkappe 9 endende Lichtleiter 14 in dem schornsteinartigen Gebilde 13a des Halters 13 angeordnet, welcher bis an die Innenseite der Linsenkappe 9 herangeführt ist. Die Sensoreinrichtung mit ihrem zweiten Sensorelement 4 ermöglicht somit ein helligkeitsabhängiges Beeinflussen von angeschlossenen Aktoren, bei dem Störgrößen weitestgehend ausgefiltert sind. Eine derartige Ausgestaltung ermöglicht auch eine arbeitsplatzbezogene Helligkeitsregelung, so dass die Helligkeitsverhältnisse bedarfsgerecht konstant gehalten werden können. Mit einer derartigen Ausbildung ist es also möglich, das Umgebungslicht bestimmter Bereiche, wie zum Beispiel vorhanden an einem Arbeitsplatz, einem Schreibtisch, einem Ausstellungsgegenstand und so weiter zu erfassen und weitgehend störungsfrei für eine bedarfsgerechte Beeinflussung von angeschlossenen Aktoren auszunutzen.

Optional kann eine - der Einfachheit halber nicht dargestellte - Blende zum Einsatz kommen, um die Erfassung von Infrarotstrahlung bedarfsgerecht auf einen Erfassungsbereich oder mehrere Erfassungsbereiche einzuschränken.

Um dem Benutzer auf komfortable Art und Weise eine Möglichkeit zu bieten, am Melder individuelle Einstellungen von Beeinflussungsparametern, insbesondere einer Empfindlichkeitseinstellung für Infrarotstrahlung und eine Inbetriebnahme als Busgerät in einem Gebäudeinstallationssystem, vornehmen zu können, weist die Leiterplattenanordnung eine erste Stelleinrichtung 5 und eine zweite Stelleinrichtung 6 auf. Die erste Stelleinrichtung 5 steht einerseits mit einem ersten Betätigungselement 5a in Wirkverbindung, welches als Schalthebel ausgeführt ist und ist andererseits zur Betätigung aus dem Gehäuseoberteil 1b nach außen geführt. Die erste Stelleinrichtung 5 ist auf der Hauptleiterplatte 2a angeordnet, als Schiebeschalter ausgeführt und zur Beeinflussung der Empfindlichkeit gegenüber Infrarotstrahlung vorgesehen. Die zweite Stelleinrichtung 6 steht einerseits mit einem zweiten Betätigungselement 6a in Wirkverbindung, welches als Taststößel ausgeführt ist und ist andererseits zur Betätigung aus dem Gehäuseoberteil 1b nach außen geführt. Die zweite Stelleinrichtung 6 ist ebenfalls auf der Hauptleiterplatte 2a angeordnet, als Tastschalter ausgeführt und für die Inbetriebnahme als Busgerät in einem Gebäudeinstallationssystem vorgesehen. Wurde der Designring 10 vom Gehäuseoberteil 1b entfernt, sind die beiden Betätigungselemente 5a, 6a für den Benutzer besonders komfortabel erreichbar und können von diesem auch auf besonders einfache Art und Weise bedient beziehungsweise eingestellt werden. Nachdem der Benutzer die individuellen Einstellungen vorgenommen hat, kann dieser auf einfache Art und Weise den Designring 10 wieder bajonettartig am Gehäuseoberteil 1b befestigen, so dass die beiden Betätigungselemente 5a, 6a formschön, das Design des Melders nicht störend, verdeckt angeordnet sind. Die Linsenkappe 9 ist zudem einstückig mit mehreren Linsensegmenten versehen, die besonders geeignet sind, Infrarotstrahlung zu erfassen und gebündelt auf die drei ersten Sensorelemente 3 der Sensoranordnung weiterzuleiten. Die Linsenkappe 9 ist einteilig mit dem Gehäuseoberteil 1b ausgeführt. Zum Anschluss von elektrischen Leitungen ist am Gehäuseunterteil 1a eine mit der Leiterplattenanordnung elektrisch leitend in Verbindung stehende Anschlussanordnung 17 vorhanden. Beim vorliegenden Ausführungsbeispiel besteht die Anschlussanordnung 17 aus zwei mit Federklemmen ausgerüsteten Klemmblöcken. Es ist eine, mehrere Steckerstifte 19 aufweisende Verbinderanordnung 18 vorgesehen, welche eine elektrisch leitende Verbindung zwischen der Hauptleiterplatte 2a und der Sensorleiterplatte 2b schafft. Auf der Hauptleiterplatte 2a sind zwei weitere Steckerstifte 19 angeordnet, die elektrisch leitend mit den Federklemmen der Anschlussanordnung 17 in Verbindung treten. Die elektrisch leitende Verbindung der Steckerstifte 19 der Verbindungsanordnung 18 mit der Hauptleiterplatte 2a erfolgt durch einen auf der Hauptleiterplatte 2a festgelegten Kontaktblock.

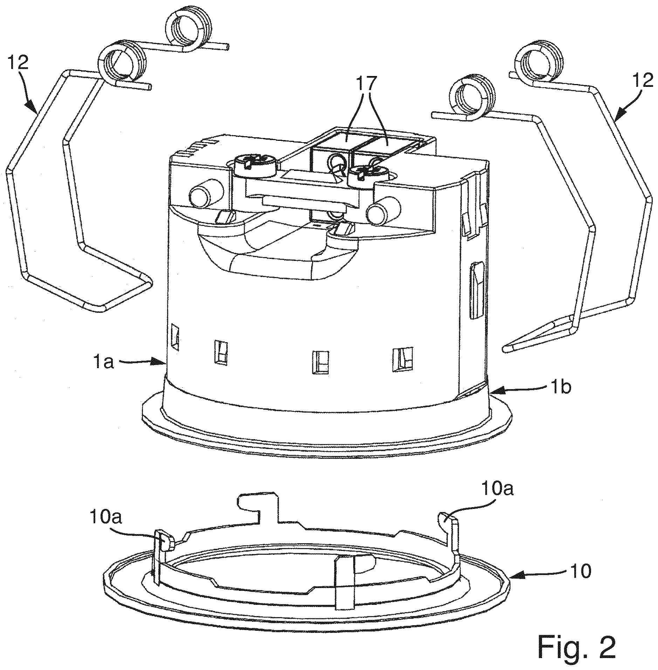

Wie insbesondere aus Figur 2 hervorgeht, ist der dort abgebildete Melder gemäß einem ersten Ausführungsbeispiel zur direkten Montage in eine - der Einfachheit halber nicht dargestellte - Zwischendecke vorgesehen. Zu diesem Zweck sind am Gehäuseunterteil 1a zwei Federbügel 12 angebracht, die automatisch für eine bedarfsgerechte Festlegung des Melders in der Zwischendecke Sorge tragen. Zur Festlegung des Melders kann insbesondere eine kreisförmige Ausnehmung in der Zwischendecke vorgesehen sein.

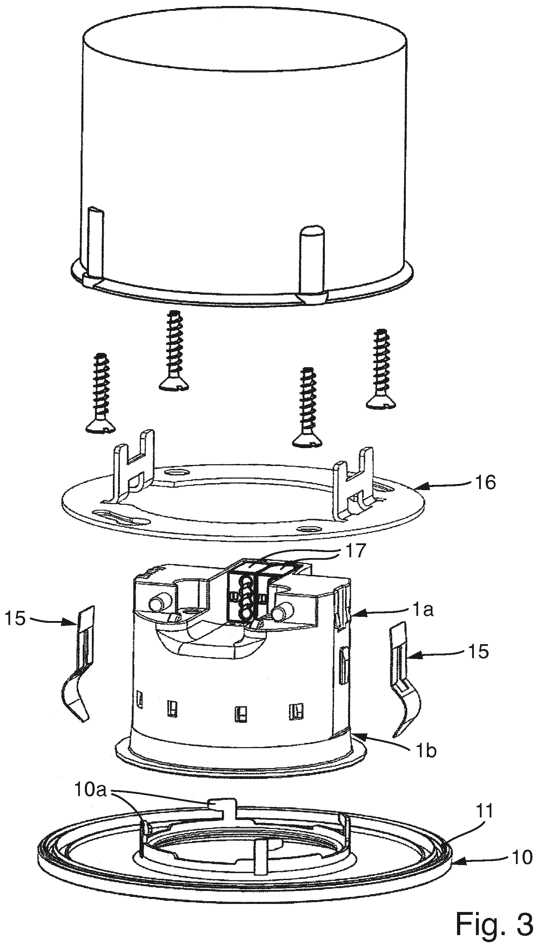

Wie insbesondere aus Figur 3 hervorgeht, ist der dort abgebildete Melder gemäß zweitem Ausführungsbeispiel zur Montage in eine Installationsdose vorgesehen. Derartige Installationsdosen können zum Beispiel als Unterputzdose, als Hohlwanddose oder als Aufputzdose ausgeführt sein. Zum Zweck der Montage in eine Installationsdose sind am Gehäuseunterteil 1a zwei Federlaschen 15 angebracht. Zudem ist ein an den Installationsdosen zu befestigender Montagering 16 vorgesehen, welcher vor der Montage des Melders an den Installationsdosen festzulegen ist. Die beiden Federlaschen 15 kommen bei der Montage mit entsprechend ausgeführten Befestigungskanten des Montageringes 16 in Wirkverbindung, so dass für eine bedarfsgerechte Festlegung des Melders in der zugehörigen Installationsdose Sorge getragen ist.

Es ist somit ein Melder realisiert, welcher bei einfachem und kostengünstigem Aufbau mit hoher Funktionszuverlässigkeit einen vergleichsweise großen Erfassungsbereich zur Verfügung stellt, wobei dessen, zur Erfassung von Umgebungslicht notwendige Sensoreinrichtung bei besonders gutem Erfassungsverhalten, ohne das Design des Melders zu stören, angeordnet ist. Der bajonettartig am Gehäuseoberteil 1b befestigte Designring 10 sorgt letztendlich für einen formschönen Abschluss des Melders, so dass auch die Betätigungselemente 5a, 6a, das Design des Melders nicht störend, verdeckt angeordnet sind.

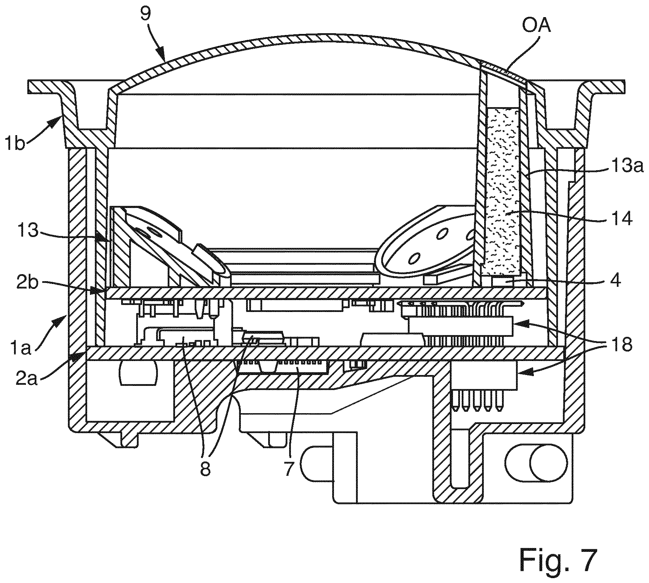

Wie insbesondere aus Figur 7 hervorgeht, kann je nach Bedarf auch eine Variante des Melders zum Einsatz kommen, die baukastenartig minder bestückt ist. Entsprechend des in Figur 7 abgebildeten Melders gemäß drittem Ausführungsbeispiel erfolgt die Minderbestückung hauptsächlich durch das Weglassen der ersten Sensorelemente 3 und weiteren, zur Funktion nicht mehr benötigten Bauteilen der Sensorleiterplatte 2b. Es ist also ein kostengünstig herzustellender, funktionell eingeschränkter Melder realisiert. Beim vorliegenden dritten Ausführungsbeispiel gemäß Figur 7 erfolgt die funktionelle Einschränkung durch Weglassen der Erfassung von Infrarotstrahlung und der nachgeschalteten Verarbeitung und Ansteuerung angeschlossener Aktoren. Der Melder ist also ausschließlich auf die Funktion der Erfassung von Umgebungslichthelligkeit, zughöriger Nachbearbeitung und Beeinflussung der angeschlossenen Aktoren ausgerichtet. Ohne den Gedanken der Erfindung zu verlassen, kann beim Weglassen anderer Bestandteile baukastenartig auch ein Melder realisiert werden, der auf andere Funktionalitäten ausgerichtet ist.

### Bezugszeichenliste:

- 1a: Gehäuseunterteil
- 1b: Gehäuseoberteil
- 2a: Hauptleiterplatte
- 2b: Sensorleiterplatte
- 3: Erste Sensorelemente
- 4: Zweite Sensorelemente
- 5: Erste Stelleinrichtung
- 5a: Erstes Betätigungselement
- 6: Zweite Stelleinrichtung
- 6a: Zweites Betätigungselement
- 7: Microcontroller
- 8: Bauteile
- 9: Linsenkappe
- 10: Designring
- 10a: Hakenförmige Befestigungselemente
- 11: Dichtelement
- 12: Federbügel
- 13: Halter
- 13a: Schornsteinartiges Gebilde
- 14: Lichtleiter
- 15: Federlasche
- 16: Montagering
- 17: Anschlussanordnung
- 18: Verbindungsanordnung
- 19: Weitere Steckerstifte

- OA: Optische Ausrichtung

## Patentansprüche

1. Melder zur Erkennung der Präsenz und/oder Bewegung von sich im Erfassungsbereich aufhaltenden Personen mit einem Gehäuse, welches zur Aufnahme einer Leiterplattenanordnung vorgesehen ist, wobei die Leiterplattenanordnung aus einer mit mehreren zur Funktion notwendigen Bauteilen (8), einer Stelleinrichtung (5, 6) und mit zumindest einem Mikrokontroller (7) bestückten Hauptleiterplatte (2a) und einer Sensorleitplatte (2b) besteht, welche mit einer zumindest ein erstes Sensorelement (3) aufweisenden ersten Sensoranordnung zur Erfassung von Infrarotstrahlung und mit einer ein zweites Sensorelement (4) aufweisenden Sensoreinrichtung zur Erfassung der Umgebungshelligkeit bestückt ist und wobei am Gehäuse eine mehrere Linsensegmente aufweisende Linsenkappe (9) festgelegt ist, wobei das Gehäuse aus einem Gehäuseunterteil (1a) und einem mit der Linsenkappe (9) versehenen Gehäuseoberteil (1b) besteht, **dadurch gekennzeichnet, dass** die Stelleinrichtung (5,6) von außen durch einen Benutzer über ein Betätigungselement (5a, 6a) beeinflussbar ist, dass das Gehäuseoberteil (1b) einstückig mit der Linsenkappe (9) versehen ist, dass die erste Sensoranordnung aus mehreren ersten Sensorelementen (3) besteht, und dass an der Sensorleiterplatte (2b) ein Halter (13) festgelegt ist, der sowohl die ersten Sensorelemente (3) der Sensoranordnung als auch das zweite Sensorelement (4) der Sensoreinrichtung aufnimmt, und dass dem zweiten Sensorelement (4) der Sensoreinrichtung ein stabartig ausgebildeter Lichtleiter (14) zugeordnet ist, welcher in einem ähnlich eines Schornsteins ausgeführten, bis an die Linsenkappe (9) herangeführten Gebilde (13a) des Halters (13) aufgenommen ist, welcher Lichtleiter (14) in Richtung der Innenseite der Linsenkappe (9) geführt ist und knapp unterhalb der Innenseite der Linsenkappe (9) endet, und dass die Linsenkappe (9) im Bereich der Lichtleiterzuordnung eine optische Ausbildung (OA) in Form eines klar transparenten Fensters aufweist, welches hinsichtlich der Materialdicke gegenüber den Linsensegmenten der Linsenkappe (9) reduziert ist.

2. Melder nach Anspruch 1, **dadurch gekennzeichnet, dass** aus dem Gehäuseoberteil (1b) einerseits zumindest ein andererseits mit der zumindest einen Stelleinrichtung (5,6) in Wirkverbindung stehendes Betätigungselement (5a, 6a) nach außen geführt ist, dessen Zugang für den Benutzer durch einen, wiederlösbar am Gehäuseoberteil (1b) festlegbaren Designring (10) abdeckbar ist.

3. Melder nach Anspruch 2, **dadurch gekennzeichnet, dass** der Designring (10) in Art einer Bajonettbefestigung wiederlösbar am Gehäuseoberteil (1b) festlegbar ist.

4. Melder nach Anspruch 2 oder 3, **dadurch gekennzeichnet, dass** der Designring (10) mit zumindest einem Dichtelement (11) versehen ist.

5. Melder nach einem der Ansprüche 1 bis 4, **dadurch gekennzeichnet, dass** zumindest ein mit einer Stelleinrichtung (5,6) in Wirkverbindung stehendes Betätigungselement als Drehstab ausgeführt ist.

6. Melder nach einem der Ansprüche 1 bis 5, **dadurch gekennzeichnet, dass** zumindest ein mit einer ersten Stelleinrichtung (5) in Wirkverbindung stehendes erstes Betätigungselement (5a) als Schalthebel ausgeführt ist.

7. Melder nach einem der Ansprüche 1 bis 6, **dadurch gekennzeichnet, dass** zumindest ein mit einer zweiten Stelleinrichtung (6) in Wirkverbindung stehendes zweites Betätigungselement (6a) als Taststößel ausgeführt ist.

8. Melder nach einem der Ansprüche 1 bis 7, **dadurch gekennzeichnet, dass** am Gehäuseunterteil (1a) zumindest ein, für eine Zwischendeckenmontage vorgesehener Federbügel (12) angebracht ist.

9. Melder nach einem der Ansprüche 1 bis 8, **dadurch gekennzeichnet, dass** am Gehäuseunterteil (1a) zumindest eine, für die Montage in einer Installationsdose vorgesehene Federlasche angebracht ist.

10. Melder nach einem der Ansprüche 1 bis 9, **dadurch gekennzeichnet, dass** am Gehäuseunterteil (1a) zumindest eine einerseits mit einer Leiterplattenanordnung elektrisch leitend in Verbindung stehende, andererseits zum Anschluss von elektrischen Leitungen vorgesehene Anschlussanordnung (17) vorhanden ist.

11. Melder nach einem der Ansprüche 1 bis 10, **dadurch gekennzeichnet, dass** die Leiterplattenanordnung (2) mit einer elektrischen Verbindungsanordnung (18) versehen ist.

## Claims

1. Detector for the detection of presence and/or motion of persons in the detection range with a housing provided to take up a PCB arrangement, wherein the PCB arrangement consists of a main PCB (2a) with several components (8) necessary for the function, an adjusting unit (5,6) and at least one microcontroller (7) and of a sensor PCB (2b), which is equipped with a first sensor arrangement for detection of infrared radiation, providing at least one first sensor element (3) and with a sensor unit for detection of the ambient brightness, providing at least one second sensor element (4) and wherein at the housing a lens cap (9) with several lens segments is fixed, wherein the housing consists of a lower part (1a) and an upper part (1b) provided with the lens cap (9) **characterized by the fact** that the adjusting unit (5,6) can be influenced from outside by a user via an operation element (5a, 6a), that the upper part of the housing (1b) is provided with the lens cap (9) in one piece, that the first sensor arrangement consists of several first sensor elements (3), and that at the sensor PCB (2b) a support (13) is fixed which takes up the first sensor elements (3) of the sensor unit as well as the second sensor element (4) of the sensor unit, and that a rod-type light conductor (14) is assigned to the second sensor element (4) of the sensor unit, this light conductor being taken up in a chimney-type housing (13a) of the support (13), reaching up to the lens cap (9), which light conductor (14) is lead in direction of the inner side of the lens cap (9) and ends closely underneath the inner side of the lens cap (9), and that in the area of the light conductor assignment the lens cap (9) provides an optical unit (OA) shaped like a clear transparent window, whose material thickness is reduced compared to the lens segments of the lens cap (9).

2. Detector in accordance with Claim 1, **characterized by the fact** that out of the upper part of the housing (1b) at least one operation element (5a, 6a) which is in operative connection with the at least one adjusting unit (5,6) is lead to the outside, user access to which can be covered by a detachable design ring (10) which can be fastened at the upper part of the housing (1b).

3. Detector in accordance with Claim 2, **characterized by the fact** that the design ring (10) can be fastened detachably at the upper part of the housing (1b) as bayonet fastening.

4. Detector in accordance with Claims 2 or 3, **characterized by the fact** that the design ring (10) is provided with at least one sealing element (11).

5. Detector in accordance with Claims 1 to 4, **characterized by the fact** that at least one operation element which is in operative connection with an adjusting unit (5,6) is designed as torsion bar.

6. Detector in accordance with Claims 1 to 5, **characterized by the fact** that at least one first operation element (5a) which is in operative connection with a first adjusting unit (5) is designed as switching lever.

7. Detector in accordance with Claims 1 to 6, **characterized by the fact** that at least one second operation element (6a) which is in operative connection with a second adjusting unit (6) is designed as sensory tappet.

8. Detector in accordance with Claims 1 to 7, **characterized by the fact** that at the lower part of the housing (1a) at least one spring bracket (12) provided for mounting in a false ceiling is attached.

9. Detector in accordance with Claims 1 to 8, **characterized by the fact** that at the lower part of the housing (1a) at least one spring strap for mounting in an installation box is attached.

10. Detector in accordance with Claims 1 to 9, **characterized by the fact** that at the lower part of the housing (1a) at least one connection arrangement (17) is provided which on the one hand is in electrically conductive connection with a PCB arrangement, on the other hand is provided for connection of electrical leads.

11. Detector in accordance with Claims 1 to 10, **characterized by** the fact that the PCB arrangement (2) is provided with an electrical connection unit (18).

## Revendications

1. Détecteur de présence et/ou de mouvement de personnes se tenant dans la zone de détection, comportant un boîtier destiné à accueillir un système de cartes à circuits imprimés, le système de cartes à circuits imprimés se composant d'une carte à circuits imprimés principale (2a), équipée de plusieurs éléments (8) nécessaires au fonctionnement, d'un dispositif de réglage (5,6) et d'au moins un microcontrôleur (7), et se composant d'une carte à circuits imprimés à capteurs (2b), laquelle est équipée d'un premier système d'éléments capteurs présentant au moins un premier élément capteur (3) destiné à la détection de rayons infrarouges et d'un système d'éléments capteurs présentant un second élément capteur (4) destiné à la détection de la luminosité ambiante, un capuchon à lentilles (9) présentant plusieurs segments de lentilles étant fixé sur le boîtier, ce boîtier se composant d'une partie inférieure du boîtier (1a) et d'une partie supérieure du boîtier (1b) présentant un capuchon à lentilles (9), **caractérisé en ce que** le dispositif de réglage (5,6) peut être influencé de l'extérieur par un utilisateur par l'intermédiaire d'un élément d'actionnement (5a, 6a), que la partie supérieure du boîtier (1b) est munie en une pièce du capuchon à lentilles (9), que le premier système d'éléments capteurs se compose de plusieurs premiers éléments capteurs (3) et qu'un support (13) est fixé à la carte à circuits imprimés à capteurs (2b), support accueillant aussi bien les premiers éléments capteurs (3) du système d'éléments capteurs que le second élément capteur (4) du système d'éléments capteurs, et qu'un conduit de lumière (14) réalisé sous forme de baguette est attribué au second élément capteur (4) du système d'éléments capteurs, conduit de lumière accueilli dans une structure (13a) du support (13) de forme cheminée et menant jusqu'au capuchon à lentilles (9), ce conduit de lumière (14) passant vers le côté intérieur du capuchon à lentilles (9) et aboutissant peu au-dessous du côté intérieur du capuchon à lentilles (9), et **en ce que** le capuchon à lentilles (9) présente dans le domaine de l'attribution du conduit de lumière une conception optique (OA) sous forme d'une fenêtre transparente claire dont l'épaisseur de matériau est réduite par rapport aux segments de lentilles du capuchon à lentilles (9).

2. Détecteur selon la revendication 1, **caractérisé en ce que** d'une part au moins un élément d'actionnement (5a, 6a) d'autre part agissant en commun avec l'au moins un dispositif de réglage (5,6) sort de la partie supérieure du boîtier (1b), élément d'actionnement dont l'accès peut être recouvert, par l'utilisateur, d'un anneau design (10) pouvant être fixé de manière détachable sur la partie supérieure du boîtier (1b).

3. Détecteur selon la revendication 2, **caractérisé en ce que** l'anneau design (10) peut être fixé de manière détachable sur la partie supérieure du boîtier (1b) par une fixation de type baïonnette.

4. Détecteur selon l'une des revendications 2 ou 3, **caractérisé en ce que** l'anneau design (10) est muni d'au moins un élément d'étanchéité (11).

5. Détecteur selon l'une des revendications 1 à 4, **caractérisé en ce que** au moins un élément d'actionnement agissant en commun avec un dispositif de réglage (5,6) est réalisé sous forme de tige pivotante.

6. Détecteur selon l'une des revendications 1 à 5, **caractérisé en ce que** au moins un premier élément d'actionnement (5a) agissant en commun avec un premier dispositif de réglage (5) est réalisé sous forme de levier de commutation.

7. Détecteur selon l'une des revendications 1 à 6, **caractérisé en ce que** au moins un deuxième élément d'actionnement (6a) agissant en commun avec un deuxième dispositif de réglage (6) est réalisé sous forme de tige-poussoir.

8. Détecteur selon l'une des revendications 1 à 7, **caractérisé en ce que** au moins un étrier ressort (12) prévu pour un montage dans un faux-plafond est monté sur la partie inférieure du boîtier (1a).

9. Détecteur selon l'une des revendications 1 à 8, **caractérisé en ce que** au moins une bride ressort prévue pour un montage dans une boîte d'installation est montée sur la partie inférieure du boîtier (1a).

10. Détecteur selon l'une des revendications 1 à 9, **caractérisé en ce que** la partie inférieure du boîtier (1a) présente au moins un système de raccordement (17) d'une part relié à un système de cartes à circuits imprimés de telle sorte qu'il y a passage de courant, d'autre part prévu pour le raccordement de lignes électriques.

11. Détecteur selon l'une des revendications 1 à 10, **caractérisé en ce que** le système de cartes à circuits imprimés (2) est muni d'un système de connexion électrique (18).
